# FASCICULE DE BREVET EUROPEEN

(11) **EP 3 275 743 B1**
(45) Date de publication et mention de la délivrance du brevet: **17.07.2019**
(21) Numéro de dépôt: 17182726.4
(22) Date de dépôt: 24.07.2017
(51) Int. Cl.: B60T 8/17

(54) **SYSTEME DE FREINAGE D'AERONEF A HAUT NIVEAU DE DISPONIBILITE**
BREMSSYSTEM FÜR LUFTFAHRZEUGSYSTEM MIT HOHER VERFÜGBARKEIT
AN AIRCRAFT BRAKING SYSTEM HAVING A HIGH LEVEL OF AVAILABILITY

(30) Priorité: 25.07.2016 FR 1657134
(43) Date de publication de la demande: 31.01.2018
(73) Titulaire: Safran Landing Systems, 78140 Vélizy-Villacoublay (FR)
(72) Inventeur: BONIGEN, François, 78140 VELIZY-VILACOUBLAY (FR); FRANK, David, 78140 VELIZY-VILACOUBLAY (FR); PIERRA, Raphaël, 78140 VELIZY VILLACOUBLAY (FR); ONFROY, Dominique, 78140 VELIZY-VILLACOUBLAY (FR)
(74) Mandataire: Lavaud, Thomas

(56) Documents cités:
- EP-A1- 2 338 748
- EP-A1- 2 878 501
- EP-A1- 2 878 503
- US-A1- 2001 045 771
- US-A1- 2008 258 548
- US-B2- 8 948 994

## Description

L'invention concerne le domaine des systèmes de freinage d'aéronef.

### ARRIERE PLAN DE L'INVENTION

La base de la conception des systèmes classiques de freinage électrique d'aéronef repose sur des architectures dites « simples » ou sur des architectures dites « dissimilaires ».

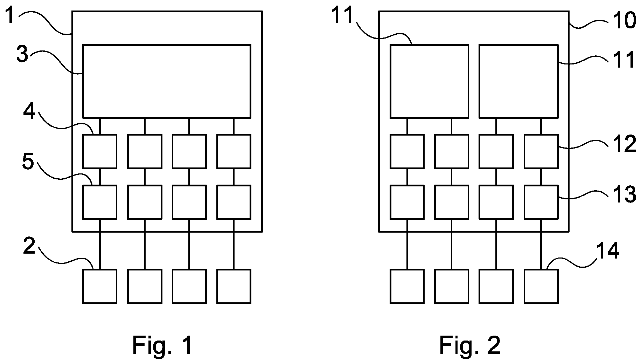

Une architecture simple, correspondant à une partie d'un système de freinage, est représentée sur la figure 1. La partie du système de freinage comporte un calculateur de freinage 1 et quatre actionneurs électromécaniques 2 comprenant chacun un moteur électrique. Les actionneurs électromécaniques 2 sont destinés à produire un effort de presse pour freiner des roues d'un aéronef.

Le calculateur de freinage 1 comporte un module de commande de freinage 3, quatre modules de commande de moteur 4, et quatre onduleurs 5. Le module de commande de freinage 3 exécute un logiciel qui met en oeuvre une boucle lente d'asservissement. Chaque module de commande de moteur 4 exécute un logiciel qui met en oeuvre une boucle rapide d'asservissement. Le module de commande de freinage 3 transmet une consigne de pilotage à chaque module de commande de moteur 4. Chaque module de commande de moteur 4 pilote le moteur de l'un des actionneurs électromécaniques 2 via l'un des onduleurs 5. L'architecture simple est ici dite « centralisée », et serait dite « distribuée » si chaque onduleur 5 était déporté et positionné à proximité ou sur l'actionneur électromécanique 2 qu'il contribue à piloter.

Une architecture dissimilaire, correspondant à une partie d'un système de freinage, est représentée sur la figure 2. Le calculateur de freinage 10 comporte deux modules de commande de freinage 11, quatre modules de commande de moteur 12 et quatre onduleurs 13. Les deux modules de commande de freinage 11 sont conçus différemment l'un de l'autre au niveau matériel (*hardware*) et/ou logiciel (*software*). Chaque module de commande de freinage 11 transmet une consigne de pilotage à deux modules de commande de moteur 12 pour piloter les moteurs de deux actionneurs électromécaniques 14. L'architecture dissimilaire est ici dite « centralisée », et serait dite « distribuée » si chaque onduleur 13 était déporté et positionné à proximité ou sur l'actionneur électromécanique 14 qu'il contribue à piloter.

Avec une architecture simple, une défaillance de mode commun est susceptible d'entraîner la perte totale du freinage. Avec une architecture dissimilaire, une défaillance de mode commun est susceptible d'entraîner au maximum la perte de 50% du freinage (dans le cas d'une panne de l'un des modules de commande de freinage).

On note cependant que, pour améliorer la disponibilité des aéronefs commerciaux, il est souvent requis que des performances de freinage soient garanties lorsque l'un des actionneurs électromécaniques est en panne (panne simple) et n'est plus en mesure de produire un effort de freinage. Dans une telle situation, une défaillance de mode commun peut entraîner la perte de 75% du freinage dans le cas d'une architecture dissimilaire : pour un frein comportant quatre actionneurs électromécaniques, seul un actionneur électromécanique reste pilotable. Dans le cas d'une architecture simple, un tel évènement peut conduire à la perte totale du freinage. Un exemple d'architecture de freinage selon l'art antérieure est montré dans le document EP 2 878 503.

### OBJET DE L'INVENTION

Un but de l'invention est d'améliorer la disponibilité d'un aéronef.

### RESUME DE L'INVENTION

A cet effet, on prévoit, selon l'invention, un système de freinage d'aéronef comprenant :
- un premier groupe d'actionneurs électromécaniques et un deuxième groupe d'actionneurs électromécaniques agencés pour appliquer un effort de freinage sur une ou des roues de l'aéronef ;
- un premier module de commande adapté à commander dans un mode de fonctionnement nominal le premier groupe d'actionneurs électromécaniques et dans un mode de fonctionnement reconfiguré le premier groupe d'actionneurs électromécaniques et le deuxième groupe d'actionneurs électromécaniques, et un deuxième module de commande adapté à commander dans un mode de fonctionnement nominal le deuxième groupe d'actionneurs électromécaniques et dans un mode de fonctionnement reconfiguré le premier groupe d'actionneurs électromécaniques et le deuxième groupe d'actionneurs électromécaniques ;
- une unité de surveillance adaptée à surveiller le fonctionnement du premier module de commande et du deuxième module de commande, et à mettre le premier module de commande dans le mode de fonctionnement reconfiguré lorsque l'unité de surveillance détecte une panne du deuxième module de commande, et à mettre le deuxième module de commande dans le mode de fonctionnement reconfiguré lorsque l'unité de surveillance détecte une panne du premier module de commande.

Le mode de fonctionnement reconfiguré des modules de commande permet au système de freinage selon l'invention de piloter un nombre d'actionneurs électromécaniques plus important en cas de panne de l'un des modules de commande. On améliore ainsi les possibilités de reconfiguration du système de freinage selon l'invention et, en cas de défaillance simple et/ou de mode commun, les performances de freinage peuvent être maintenues à un niveau acceptable.

L'invention permet d'améliorer la disponibilité de l'aéronef par l'ajout de composants simples, sans ajout de redondance matérielle.

On propose de plus un système de freinage tel que décrit plus tôt, dans lequel, lorsque l'un des premier module de commande et deuxième module de commande se trouve dans le mode de fonctionnement reconfiguré, l'autre des premier module de commande et deuxième module de commande est obligatoirement inhibé, et dans lequel, lorsque l'un des premier module de commande et deuxième module de commande se trouve dans le mode de fonctionnement nominal, l'autre des premier module de commande et deuxième module de commande se trouve lui aussi obligatoirement dans le mode de fonctionnement nominal.

On propose de plus un système de freinage tel que décrit plus tôt, dans lequel l'unité de surveillance comporte un premier module de surveillance agencé pour surveiller le fonctionnement du premier module de commande et un deuxième module de surveillance agencé pour surveiller le fonctionnement du deuxième module de commande, le premier module de surveillance étant adapté, lorsqu'il détecte une panne du premier module de commande, à faire passer le deuxième module de commande dans le mode reconfiguré, et le deuxième module de surveillance étant adapté, lorsqu'il détecte une panne du deuxième module de commande, à faire passer le premier module de commande dans le mode reconfiguré.

On propose en outre un système de freinage tel que décrit plus tôt, dans lequel le premier module de surveillance et le deuxième module de surveillance comportent chacun une sortie reliée à la fois à une entrée discrète du premier module de commande et à une entrée discrète du deuxième module de commande, les sorties et les entrées discrètes étant utilisées pour faire passer le premier module de commande et le deuxième module de commande dans le mode de fonctionnement nominal et dans le mode de fonctionnement reconfiguré.

On propose de plus un système de freinage tel que décrit plus tôt, dans lequel chaque module de surveillance possède une pluralité d'entrées recevant des signaux de surveillance et met en oeuvre une fonction de recombinaison sur la pluralité d'entrées, le résultat de la fonction de recombinaison étant appliquée sur la sortie du module de surveillance.

On propose aussi un système de freinage tel que décrit plus tôt, dans lequel les signaux de surveillance comprennent un signal de surveillance logicielle permettant de détecter une absence de freinage en réponse à une consigne de freinage, et/ou un signal de surveillance matérielle permettant de détecter un défaut d'activité et/ou un signal de surveillance de sortie d'un module de commande.

On propose par ailleurs un système de freinage tel que décrit plus tôt, dans lequel chaque module de commande possède une sortie nominale utilisée dans le mode de fonctionnement nominal et dans le mode de fonctionnement reconfigurée, et une sortie reconfigurée utilisée uniquement dans le mode de fonctionnement reconfiguré, la sortie nominale de l'un des modules de commande et la sortie reconfigurée de l'autre module de commande étant reliées à des actionneurs électromécaniques via une unité OU qui met en oeuvre une fonction logique OU sur des entrées de l'unité OU et applique le résultat de la fonction OU sur une sortie de l'unité OU.

On propose de plus un système de freinage tel que décrit plus tôt, dans lequel chaque actionneur électromécanique est piloté via un onduleur intégré dans un calculateur de freinage dans lequel sont positionnés le premier module de commande et le deuxième module de commande.

On propose de plus un système de freinage tel que décrit plus tôt, dans lequel chaque actionneur électromécanique est piloté via un onduleur intégré à l'actionneur électromécanique.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 représente un système de freinage d'aéronef de l'art antérieur, agencé selon une architecture centralisée simple ;
- la figure 2 représente un système de freinage d'aéronef de l'art antérieur, agencé selon une architecture centralisée dissimilaire ;
- la figure 3 représente un système de freinage d'aéronef selon un premier mode de réalisation de l'invention, le système de freinage étant configuré pour fonctionner dans un mode nominal ;
- la figure 4 représente une unité « OU » du système de freinage d'aéronef selon le premier mode de réalisation de l'invention ;
- la figure 5 représente des moyens de surveillance du système de freinage d'aéronef selon le premier mode de réalisation de l'invention ;
- la figure 6 représente un système de freinage d'aéronef selon le premier mode de réalisation de l'invention, le système de freinage étant configuré pour fonctionner selon un mode reconfiguré ;
- la figure 7 est un tableau contenant des états de fonctionnement d'un module de commande de moteur du système de freinage selon le premier mode de réalisation de l'invention ;
- la figure 8 représente un système de freinage d'aéronef selon un deuxième mode de réalisation de l'invention.

### DESCRIPTION DETAILLEE DE L'INVENTION

Le système de freinage d'aéronef selon un premier mode de réalisation de l'invention comporte huit actionneurs électromécaniques destinés à produire des efforts de freinage pour freiner deux roues d'un aéronef, et deux calculateurs de freinage qui commandent les huit actionneurs électromécanique.

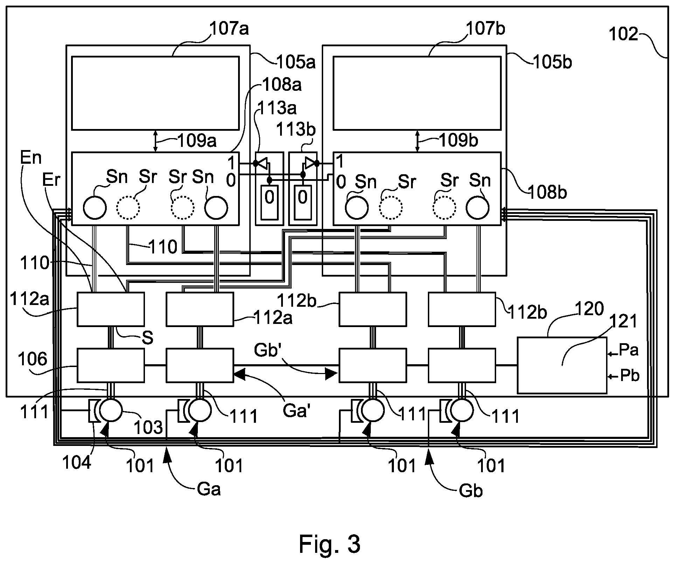

On illustre ici, en référence à la figure 3, le système de freinage d'aéronef selon le premier mode de réalisation de l'invention en utilisant uniquement quatre actionneurs électromécaniques 101 et un calculateur de freinage 102 qui commande les quatre actionneurs électromécaniques 101.

Les quatre actionneurs électromécaniques 101 et le calculateur de freinage 102 doivent donc être dupliqués pour obtenir le système de freinage d'aéronef complet.

Les quatre actionneurs électromécaniques 101 sont répartis en un premier groupe Ga d'actionneurs électromécaniques 101 et en un deuxième groupe Gb d'actionneurs électromécaniques 101. Le premier groupe Ga et le deuxième groupe Gb comportent chacun un actionneur électromécanique 101 qui produit un quart de l'effort de freinage total pour freiner une roue et un actionneur électromécanique 101 qui produit un quart de l'effort de freinage total pour freiner l'autre roue (pour chaque roue, la moitié restante de l'effort de freinage total est apportée par la duplication qui vient d'être évoquée).

Chaque actionneur électromécanique 101 comporte un moteur 103, un capteur de position angulaire 104 d'un rotor du moteur 103, et un poussoir entraîné par le moteur 103 pour appliquer l'effort de freinage sur des organes de friction pour freiner la roue.

Le calculateur de freinage 102 comporte un premier module de commande 105a, un deuxième module de commande 105b et quatre onduleurs 106 répartis en un premier groupe Ga' d'onduleurs 106 et en un deuxième groupe Gb' d'onduleurs 106 (le premier groupe Ga' et le deuxième groupe Gb' comportent chacun deux onduleurs 106).

L'architecture du système de freinage selon le premier mode de réalisation est dite centralisée, car les onduleurs 106 sont regroupés dans le calculateur de freinage 102, et ne sont pas déportés à proximité des actionneurs électromécaniques 101.

Le premier module de commande 105a comporte un premier module de commande de freinage 107a et un premier module de commande de moteur 108a reliés entre eux par un premier bus numérique 109a permettant une communication bidirectionnelle. Le deuxième module de commande 105b comporte un deuxième module de commande de freinage 107b et un deuxième module de commande de moteur 108b reliés entre eux par un deuxième bus numérique 109b permettant une communication bidirectionnelle.

Le premier module de commande de freinage 107a et le deuxième module de commande de freinage 107b sont conçus différemment l'un de l'autre au niveau matériel. Le premier module de commande de moteur 108a et le deuxième module de commande de moteur 108b sont conçus différemment l'un de l'autre au niveau matériel. Le système de freinage présente ainsi une architecture dissimilaire.

Le premier module de commande de freinage 107a et le deuxième module de commande de freinage 107b reçoivent chacun une consigne de freinage et exécutent un logiciel qui met en oeuvre une boucle lente d'asservissement de freinage.

Le premier module de commande de freinage 107a transmet via le premier bus numérique 109a une consigne de pilotage au premier module de commande de moteur 108a. Le premier module de commande de moteur 108a exécute un logiciel qui met en oeuvre une boucle rapide d'asservissement de pilotage de moteur pour générer des commandes de pilotage. Le deuxième module de commande de freinage 107b transmet via le deuxième bus numérique 109b une consigne de pilotage au deuxième module de commande de moteur 108b. Le deuxième module de commande de moteur 108b exécute un logiciel qui met en oeuvre une boucle rapide d'asservissement de pilotage de moteur pour générer des commandes de pilotage.

Le premier module de commande 105a et le deuxième module de commande 105b sont chacun adaptés à commander l'ensemble des quatre actionneurs électromécaniques 101.

Les logiciels du premier module de commande de freinage 107a, du deuxième module de commande de freinage 107b, du premier module de commande de moteur 108a et du deuxième module de commande de moteur 108b disposent ainsi de l'ensemble des informations requises pour piloter les moteurs des quatre actionneurs électromécaniques 101.

Le premier module de commande de moteur 108a et le deuxième module de commande de moteur 108b comportent par ailleurs chacun deux sorties dites « nominales » Sn et deux sorties dites « reconfigurées » Sr qui permettent à chacun des premier module de commande de moteur 108a et deuxième module de commande de moteur 108b de transmettre une commande de pilotage via une ligne de commande 110 (comprenant trois conducteurs) à chaque onduleur 106 du premier groupe Ga' d'onduleurs 106 et du deuxième groupe Gb' d'onduleurs 106. La commande de pilotage est constituée de signaux logiques.

Chaque onduleur 106 du premier groupe Ga' transmet une puissance électrique de pilotage via une ligne triphasée 111 (comprenant trois conducteurs) au moteur de l'un des actionneurs électromécaniques 101 du premier groupe Ga d'actionneurs électromécaniques 101. Chaque onduleur 106 du deuxième groupe Gb' transmet une puissance électrique de pilotage via une ligne triphasée 111 (comprenant trois conducteurs) au moteur 3 de l'un des actionneurs électromécaniques 1 du deuxième groupe Gb' d'actionneurs électromécaniques 101.

Le calculateur de freinage 102 comporte de plus deux premières unité OU 112a et deux deuxièmes unités OU 112b. Chacune des premières unités OU 112a et des deuxièmes unités OU 112b possède une entrée nominale En, une entrée reconfigurée Er et une sortie S.

Chaque sortie nominale Sn du premier module de commande de moteur 108a est reliée à l'entrée nominale En de l'une des deux premières unités OU 112a. Chaque sortie reconfigurée Sr du premier module de commande de freinage 108a est reliée à l'entrée reconfigurée Er de l'une des deux deuxièmes unités OU 112b.

Chaque sortie nominale Sn du deuxième module de commande de moteur 108b est reliée à l'entrée nominale En de l'une des deux deuxièmes unités OU 112b. Chaque sortie reconfigurée Sr du deuxième module de commande de freinage 108b est reliée à l'entrée reconfigurée Er de l'une des deux premières unités OU 112a.

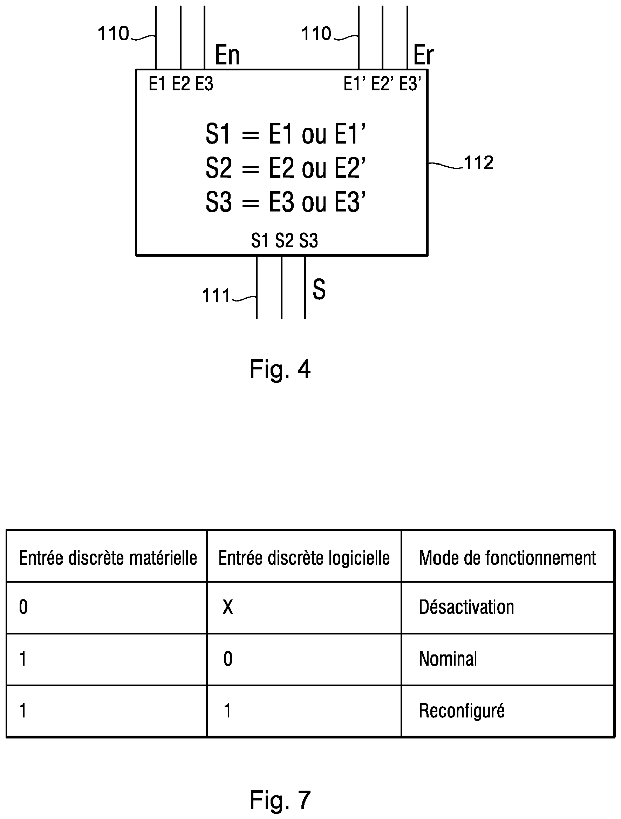

Ainsi, en référence à la figure 4, chaque unité OU 112 possède une entrée nominale En reliée aux trois conducteurs d'une ligne de commandes 110 elle-même reliée à une sortie nominale Sn de l'un des modules de commande de moteur 108, et une entrée reconfigurée Er reliée aux trois conducteurs d'une ligne de commandes 110 elle-même reliée à une sortie reconfigurée Sr de l'autre des modules de commande de moteur 108.

Chaque unité OU 112 met en oeuvre une fonction logique « OU » sur son entrée nominale En et son entrée reconfigurée Er, et applique le résultat sur sa sortie S. La fonction logique « OU » s'applique sur les signaux logiques de la commande de pilotage des onduleurs.

Ainsi, les signaux sur trois conducteurs reliés à la sortie S de chaque unité OU 112 sont égaux aux signaux de l'entrée nominale En ou sont égaux aux signaux de l'entrée reconfigurée Er, en fonction du résultat de la fonction logique OU.

Le calculateur de freinage 102 comporte de plus une unité de surveillance adaptée à surveiller le fonctionnement du premier module de commande 105a et du deuxième module de commande 105b.

L'unité de surveillance comporte un premier module de surveillance 113a surveillant le fonctionnement du premier module de commande 105a, et un deuxième module de surveillance 113b surveillant le fonctionnement du deuxième module de commande 105b.

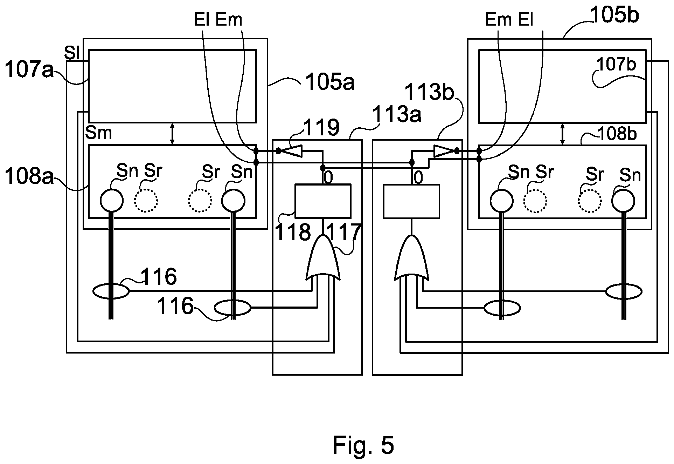

En référence à la figure 5, le premier module de surveillance 113a comporte une entrée reliée à une sortie logicielle Sl du premier module de commande de freinage 107a, via laquelle le premier module de surveillance 113a reçoit un signal de surveillance logicielle du premier module de commande de freinage 107a, et une entrée reliée à une sortie matérielle Sm du premier module de commande de freinage 107a, via laquelle le premier module de surveillance 113a reçoit un signal de surveillance matérielle du premier module de commande de freinage 107a. Le premier module de surveillance 113a comporte de plus deux entrées reliées à des capteurs 116 surveillant les deux sorties nominales Sn du premier module de commande de moteur 108a, via lesquelles le premier module de surveillance 113a reçoit des signaux de surveillance des sorties lui permettant de détecter un comportement anormal des sorties nominales Sn du premier module de commande de moteur 108a.

Le signal de surveillance logicielle permet de détecter une absence de freinage en réponse à une consigne de freinage transmise au premier module de commande de freinage 107a. Le signal de surveillance matérielle permet de détecter un défaut d'activité du premier module de commande de freinage 107a en utilisant des mécanismes de type circuit électronique *Watchdog* (ou « chien de garde », en français). Les capteurs 116 détectent quant à eux une mise à l'état haut prolongée de la commande de pilotage qui commande des transistors de puissance des onduleurs 106. En effet, pour garantir un fonctionnement optimal des moteurs 103 des actionneurs électromécaniques 101, des temps morts sont introduits par le premier module de commande de moteur 108a pour pallier aux temps de commutation des transistors de puissance. Ainsi, par conception, une commande de pilotage présente sur une sortie nominale Sn du premier module de commande de moteur 108a (par exemple, une commande de pilotage de type Ki) ne peut rester à l'état haut plus d'un certain temps.

Le deuxième module de surveillance 113b surveille de la même manière le deuxième module de commande 105b.

Chacun des premier module de surveillance 113a et deuxième module de surveillance 113b comporte une porte OU 117, une bascule synchrone 118, et une porte NON 119.

La porte OU 117 du premier module de surveillance 113a met en oeuvre une fonction logique OU sur les entrées du premier module de surveillance 113a. La sortie de la porte OU 117 est appliquée en entrée de la bascule synchrone 118 du premier module de surveillance 113a. La sortie de la bascule synchrone 118 du premier module de surveillance 113a est reliée à une entrée discrète logicielle El du deuxième module de commande de moteur 108b. La sortie de la bascule synchrone 118 du premier module de surveillance 113a est de plus appliquée en entrée de la porte NON 119 du premier module de surveillance 113a. La sortie de la porte NON 119 du premier module de surveillance 113a est reliée à une entrée discrète matérielle Em du premier module de commande de moteur 108a.

De même, la porte OU 117 du deuxième module de surveillance 113b met en oeuvre une fonction logique OU sur les entrées du deuxième module de surveillance 113b. La sortie de la porte OU 117 est appliquée en entrée de la bascule synchrone 118 du deuxième module de surveillance 113b. La sortie de la bascule synchrone 118 du deuxième module de surveillance 113b est reliée à une entrée discrète logicielle El du premier module de commande de moteur 108a. La sortie de la bascule synchrone 118 du deuxième module de surveillance 113b est de plus appliquée en entrée de la porte NON 119 du deuxième module de surveillance 113b. La sortie de la porte NON 119 du deuxième module de surveillance 113b est reliée à une entrée discrète matérielle Em du deuxième module de commande de moteur 108b.

On note qu'avantageusement, les entrées du premier module de surveillance 113a et du deuxième module de surveillance 113b peuvent être verrouillées par un dispositif de verrouillage comprenant un mécanisme de bascule réinitialisé à chaque démarrage pour éviter des commutations intempestives. On pourrait aussi verrouiller par un tel dispositif de verrouillage les sorties du premier module de surveillance 113a et du deuxième module de surveillance 113b, ou bien les entrées ou les sorties des bascules synchrones 118 du premier module de surveillance 113a et du deuxième module de surveillance 113b. Le dispositif de verrouillage peut aussi être adapté à empêcher un déclenchement simultané du premier module de surveillance 113a et du deuxième module de surveillance 113b.

Enfin, le calculateur de freinage 102 comporte un module d'alimentation 120 (visible sur la figure 3) relié à une première source de puissance continue Pa et à une deuxième source de puissance continue Pb indépendante de la première source de puissance continue Pa. Le module d'alimentation 120 comporte des moyens de protection 121 destinés à protéger le calculateur de freinage 102 de perturbations diverses provenant notamment de la première source de puissance continue Pa et de la deuxième source de puissance continue Pb. Le module d'alimentation 120 fournit une puissance d'alimentation continue aux onduleurs 106 grâce à laquelle chaque onduleur 106, commandé par une commande de pilotage, pilote le moteur 103 d'un actionneur électromécanique 101.

On décrit maintenant en détail le fonctionnement du système de freinage selon le premier mode de réalisation de l'invention.

Le système de freinage est adapté à fonctionner selon un mode de fonctionnement nominal et selon un mode de fonctionnement reconfiguré.

Le mode de fonctionnement nominal, visible sur la figure 3, correspond à une situation où le premier module de commande 105a et le deuxième module de commande 105b fonctionnent normalement.

Le premier module de surveillance 113a et le deuxième module de surveillance 113b ne détectent aucune panne. La sortie des portes OU 117 du premier module de surveillance 113a et du deuxième module de surveillance 113b sont dans un état bas (égal à « 0 »), et donc les entrées discrètes logicielles El du premier module de commande de moteur 108a et du deuxième module de commande de moteur 108b sont dans un état bas, et les entrées discrètes matérielles Em du premier module de commande de moteur 108a et du deuxième module de commande de moteur 108b sont dans un état haut (égal à « 1 », grâce aux portes NON 119).

Chaque module de commande de moteur 108, du fait de l'état bas de son entrée discrète logicielle El et l'état haut de son entrée discrète matérielle Em, se trouve dans un mode de fonctionnement nominal.

Le premier module de commande de moteur 108a et le deuxième module de commande de moteur 108b exécutent chacun une boucle rapide d'asservissement de pilotage de moteur pour piloter la moitié des moteurs.

Le premier module de commande moteur 108a transmet ainsi via ses deux sorties nominales Sn une commande de pilotage aux actionneur électromécaniques 101 du premier groupe Ga. Les deux sorties reconfigurées Sr du premier module de commande de moteur 108a sont inactives.

Chaque première unité OU 112a reçoit donc une commande de pilotage sur son entrée nominale En et ne reçoit aucun signal sur son entrée reconfigurée Er. Chaque première unité OU 112a applique donc sur sa sortie son entrée nominale En pour fournir la commande de pilotage à l'un des actionneurs électromécaniques 101 du premier groupe Ga.

De même, le deuxième module de commande de moteur 108b transmet via ses deux sorties nominales Sn une commande de pilotage aux actionneurs électromécaniques 101 du deuxième groupe Gb. Les deux sorties reconfigurées Sr du deuxième module de commande de moteur 108b sont inactives.

Chaque deuxième unité OU 112b reçoit donc une commande de pilotage sur son entrée nominale En et ne reçoit aucun signal sur son entrée reconfigurée Er. Chaque deuxième unité OU 112b applique donc sur sa sortie son entrée nominale En pour fournir la commande de pilotage à l'un des actionneurs électromécaniques 101 du deuxième groupe Gb.

On note que, lorsque l'un des premier module de commande de moteur 108a et deuxième module de commande de moteur 108b, et donc lorsque l'un des premier module de commande 105a et deuxième module de commande 105b se trouve dans le mode de fonctionnement nominal, l'autre des premier module de commande de moteur 108a et deuxième module de commande de moteur 108b, et donc l'autre des premier module de commande 105a et deuxième module de commande 105b, se trouve lui aussi obligatoirement dans le mode de fonctionnement nominal.

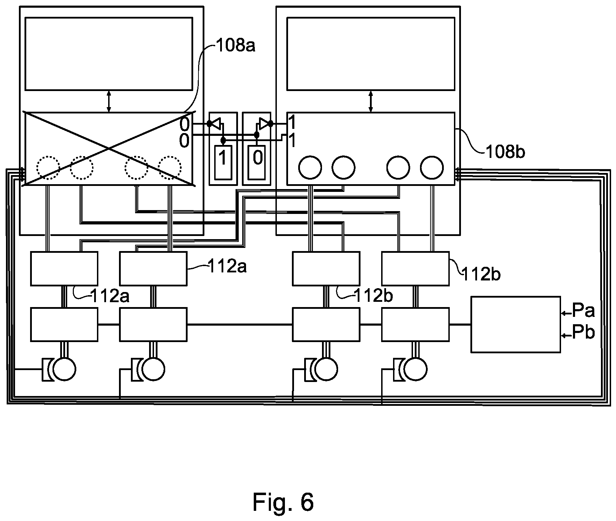

Le mode de fonctionnement reconfiguré, visible sur la figure 6, correspond à une situation où une panne survient sur l'un des modules de commande 105.

Ici, en l'occurrence, on se place dans un cas où la panne survient sur le premier module de commande de moteur 108a du premier module de commande 105a.

L'un des signaux parmi les signaux produits par les capteurs 116 (selon l'origine de la panne), se trouve dans un état haut. La sortie de la porte OU 117 du premier module de surveillance 113a passe alors dans un état haut.

L'entrée discrète logicielle El du deuxième module de commande de moteur 108b passe alors dans un état haut, et l'entrée discrète matérielle Em du premier module de commande de moteur 108a passe dans un état bas.

Le premier module de commande de moteur 108a, du fait de l'état bas de son entrée discrète matérielle Em, est inhibé (un microprocesseur du premier module de commande de moteur 108a est éteint). Les sorties nominales Sn et les sorties reconfigurées Sr du premier module de commande de moteur 108a sont inactives et mises dans un état bas.

Le deuxième module de commande de moteur 108b, du fait de l'état haut de son entrée discrète matérielle Em et de l'état haut de son entrée discrète logicielle El, passe dans un mode reconfiguré.

Le deuxième module de commande de moteur 108b exécute une boucle rapide d'asservissement de pilotage de moteur pour piloter la totalité des moteurs.

Le deuxième module de commande de moteur 108b transmet ainsi via ses deux sorties nominales Sn une commande de pilotage aux actionneurs électromécaniques 101 du deuxième groupe Gb, et transmet via ses deux sorties reconfigurées Sr une commande de pilotage aux actionneurs électromécaniques 101 du premier groupe Ga.

Les deux sorties nominales Sn et les deux sorties reconfigurées Sr du deuxième module de commande de moteur 108b sont donc actives.

Chaque deuxième unité OU 112b reçoit donc une commande de pilotage sur son entrée nominale En, et un signal nul sur son entrée reconfigurée Er. Chaque deuxième unité OU 112b applique donc sur sa sortie son entrée nominale En pour fournir la commande de pilotage à l'un des actionneurs électromécaniques 101 du deuxième groupe Gb.

Chaque première unité OU 112a reçoit donc une commande de pilotage sur son entrée reconfigurée Er, et un signal nul sur son entrée nominale En. Chaque première unité OU 112a applique donc sur sa sortie son entrée reconfigurée Er pour fournir la commande de pilotage à l'un des actionneurs électromécaniques 101 du premier groupe Ga.

Ainsi, malgré la panne qui touche le premier module de commande 105a, les quatre actionneurs électromécaniques sont pilotés et le freinage est assuré à 100% par le deuxième module de commande 105b.

On note, en référence à la figure 7, que chaque module de commande de freinage 108 fonctionne selon trois modes distincts selon les états de son entrée discrète matérielle et de son entrée discrète logicielle : un mode de désactivation, un mode nominal, et un mode reconfiguré.

Bien sûr, lorsqu'une panne survient sur le deuxième module de commande 105b, le fonctionnement du système de freinage est semblable à ce qui vient d'être décrit, et l'ensemble du freinage est assuré par le premier module de commande 105a.

On note que, lorsque l'un des premier module de commande de moteur 108a et deuxième module de commande de moteur 108b, et donc lorsque l'un des premier module de commande 105a et deuxième module de commande 105b se trouve dans le mode de fonctionnement reconfiguré, l'autre des premier module de commande de moteur 108a et deuxième module de commande de moteur 108b, et donc l'autre des premier module de commande 105a et deuxième module de commande 105b, est obligatoirement inhibé.

Le système de freinage selon l'invention présente donc une architecture dissimilaire dans laquelle, en cas de défaillance simple et/ou de mode commun, les performances du freinage sont maintenues à leur plus haut niveau.

On note de plus que l'utilisation de la première source de puissance continue Pa et de la deuxième source de puissance continue Pb indépendante de la première source de puissance continue Pa permet au système de freinage de fonctionner normalement malgré une défaillance d'une source de puissance.

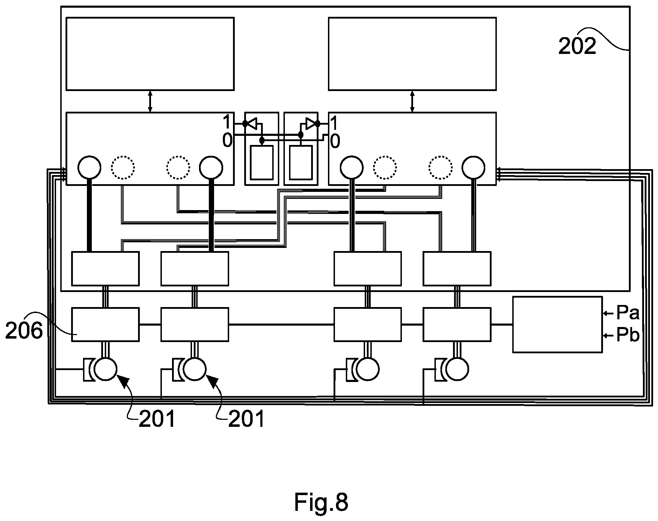

Dans un deuxième mode de réalisation, en référence à la figure 8, les onduleurs 206 ne sont plus situés dans le calculateur de freinage 202. Chaque onduleur 206 est déporté et est situé à proximité d'un actionneur électromécanique 201. En l'occurrence, chaque onduleur 206 est directement intégré à un actionneur électromécanique 201. L'architecture est donc une architecture distribuée. On note que la notion d'architecture distribuée peut être généralisée à d'autres degrés de distribution.

Bien entendu, l'invention n'est pas limitée aux modes de réalisation décrits mais englobe toute variante entrant dans le champ de l'invention telle que définie par les revendications.

Bien que l'on ait indiqué que le premier module de commande et le deuxième module de commande sont intégrés dans un même calculateur de freinage, il est possible de les intégrer dans deux calculateurs de freinage distincts.

La fonction OU, mise en oeuvre dans chaque module de surveillance, pourrait être une fonction de recombinaison des entrées différentes (par exemple, une fonction qui combinerait un « OU » logique et un « ET » logique).

Bien que le système de freinage décrit ici présente une architecture dissimilaire, l'invention s'applique bien sûr à un système de freinage présentant une architecture non dissimilaire.

De même, bien que l'on ait indiqué que le premier groupe Ga et le deuxième groupe Gb comportent chacun un actionneur électromécanique utilisé pour freiner une roue et un actionneur électromécanique utilisé pour freiner une autre roue, l'invention s'applique bien sûr à des groupes d'actionneurs utilisés chacun pour freiner une seule roue.

## Revendications

1. Système de freinage d'aéronef comprenant :
- un premier groupe (Ga) d'actionneurs électromécaniques (101) et un deuxième groupe (Gb) d'actionneurs électromécaniques (101) agencés pour appliquer un effort de freinage sur des roues de l'aéronef ; **caractérisé par**
- un premier module de commande (105a) adapté à commander dans un mode de fonctionnement nominal le premier groupe d'actionneurs électromécaniques et dans un mode de fonctionnement reconfiguré le premier groupe d'actionneurs électromécaniques et le deuxième groupe d'actionneurs électromécaniques, et un deuxième module de commande (105b) adapté à commander dans un mode de fonctionnement nominal le deuxième groupe d'actionneurs électromécaniques et dans un mode de fonctionnement reconfiguré le premier groupe d'actionneurs électromécaniques et le deuxième groupe d'actionneurs électromécaniques ;
- une unité de surveillance adaptée à surveiller le fonctionnement du premier module de commande et du deuxième module de commande, et à mettre le premier module de commande dans le mode de fonctionnement reconfiguré lorsque l'unité de surveillance détecte une panne du deuxième module de commande, et à mettre le deuxième module de commande dans le mode de fonctionnement reconfiguré lorsque l'unité de surveillance détecte une panne du premier module de commande.

2. Système de freinage selon la revendication 1, dans lequel, lorsque l'un des premier module de commande (105a) et deuxième module de commande (105b) se trouve dans le mode de fonctionnement reconfiguré, l'autre des premier module de commande (105a) et deuxième module de commande (105b) est obligatoirement inhibé, et dans lequel, lorsque l'un des premier module de commande (105a) et deuxième module de commande (105b) se trouve dans le mode de fonctionnement nominal, l'autre des premier module de commande (105a) et deuxième module de commande (105b) se trouve lui aussi obligatoirement dans le mode de fonctionnement nominal.

3. Système de freinage selon la revendication 1, dans lequel l'unité de surveillance comporte un premier module de surveillance (113a) agencé pour surveiller le fonctionnement du premier module de commande (105a) et un deuxième module de surveillance (113b) agencé pour surveiller le fonctionnement du deuxième module de commande (105b), le premier module de surveillance (113a) étant adapté, lorsqu'il détecte une panne du premier module de commande, à faire passer le deuxième module de commande dans le mode reconfiguré, et le deuxième module de surveillance (113b) étant adapté, lorsqu'il détecte une panne du deuxième module de commande, à faire passer le premier module de commande dans le mode reconfiguré.

4. Système de freinage selon la revendication 3, dans lequel le premier module de surveillance (113a) et le deuxième module de surveillance (113b) comportent chacun une sortie reliée à la fois à une entrée discrète du premier module de commande (105a) et à une entrée discrète du deuxième module de commande (105b), les sorties et les entrées discrètes étant utilisées pour faire passer le premier module de commande (105a) et le deuxième module de commande (105b) dans le mode de fonctionnement nominal et dans le mode de fonctionnement reconfiguré.

5. Système de freinage selon la revendication 4, dans lequel chaque module de surveillance possède une pluralité d'entrées recevant des signaux de surveillance et met en oeuvre une fonction de recombinaison sur la pluralité d'entrées, le résultat de la fonction de recombinaison étant appliquée sur la sortie du module de surveillance.

6. Système de freinage selon la revendication 5, dans lequel les signaux de surveillance comprennent un signal de surveillance logicielle permettant de détecter une absence de freinage en réponse à une consigne de freinage, et/ou un signal de surveillance matérielle permettant de détecter un défaut d'activité et/ou un signal de surveillance de sortie d'un module de commande (105).

7. Système de freinage selon la revendication 1, dans lequel chaque module de commande possède une sortie nominale utilisée dans le mode de fonctionnement nominal et dans le mode de fonctionnement reconfigurée, et une sortie reconfigurée utilisée uniquement dans le mode de fonctionnement reconfiguré, la sortie nominale de l'un des modules de commande et la sortie reconfigurée de l'autre module de commande étant reliées à des actionneurs électromécaniques via une unité OU (112) qui met en oeuvre une fonction logique OU sur des entrées de l'unité OU (112) et applique le résultat de la fonction OU sur une sortie de l'unité OU (112).

8. Système de freinage selon l'une des revendications précédentes, dans lequel chaque actionneur électromécanique (101) est piloté via un onduleur (106) intégré dans un calculateur de freinage (102) dans lequel sont positionnés le premier module de commande (105a) et le deuxième module de commande (105b).

9. Système de freinage selon l'une des revendications 1 à 7, dans lequel chaque actionneur électromécanique (101) est piloté via un onduleur (106) intégré à l'actionneur électromécanique (101).

## Patentansprüche

1. Luftfahrzeugbremssystem, umfassend:
- eine erste Gruppe (Ga) von elektromechanischen Aktoren (101) und eine zweite Gruppe (Gb) von elektromechanischen Aktoren (101), die ausgebildet sind, um eine Bremskraft auf Räder des Luftfahrzeugs aufzubringen; **gekennzeichnet durch**
- ein erstes Steuermodul (105a), das angepasst ist, in einem nominalen Betriebsmodus die erste Gruppe von elektromechanischen Aktoren und in einem rekonfigurierten Betriebsmodus die erste Gruppe von elektromechanischen Aktoren und die zweite Gruppe von elektromechanischen Aktoren zu steuern, sowie ein zweites Steuermodul (105b), das angepasst ist, in einem nominalen Betriebsmodus die zweite Gruppe von elektromechanischen Aktoren und in einem rekonfigurierten Betriebsmodus die erste Gruppe von elektromechanischen Aktoren und die zweite Gruppe von elektromechanischen Aktoren zu steuern;
- eine Überwachungseinheit, die angepasst ist, den Betrieb des ersten Steuermoduls und des zweiten Steuermoduls zu überwachen und das erste Steuermodul in den rekonfigurierten Betriebsmodus zu versetzen, wenn die Überwachungseinheit eine Störung des zweiten Steuermoduls erfasst, und das zweite Steuermodul in den rekonfigurierten Betriebsmodus zu versetzen, wenn die Überwachungseinheit eine Störung des ersten Steuermoduls erfasst.

2. Bremssystem nach Anspruch 1, bei dem, wenn sich ein Modul aus erstem Steuermodul (105) und zweitem Steuermodul (105b) in dem rekonfigurierten Betriebsmodus befindet, das andere Modul aus erstem Steuermodul (105a) und zweitem Steuermodul (105b) zwangsläufig blockiert wird, und bei dem, wenn sich ein Modul aus erstem Steuermodul (105a) und zweitem Steuermodul (105b) in dem nominalen Betriebsmodus befindet, sich das andere Modul aus erstem Steuermodul (105a) und zweitem Steuermodul (105b) auch zwangsläufig in dem nominalen Betriebsmodus befindet.

3. Bremssystem nach Anspruch 1, bei dem die Überwachungseinheit ein erstes Überwachungsmodul (113a) umfasst, das ausgebildet ist, um den Betrieb des ersten Steuermoduls (105a) zu überwachen, sowie ein zweites Überwachungsmodul (113b), das ausgebildet ist, um den Betrieb des zweiten Steuermoduls (105b) zu überwachen, wobei das erste Überwachungsmodul (113a) angepasst ist, wenn es eine Störung des ersten Steuermoduls erfasst, das zweite Steuermodul in den rekonfigurierten Modus zu schalten, und das zweite Überwachungsmodul (113b) angepasst ist, wenn es eine Störung des zweiten Steuermoduls erfasst, das erste Steuermodul in den rekonfigurierten Modus zu schalten.

4. Bremssystem nach Anspruch 3, bei dem das erste Überwachungsmodul (113a) und das zweite Überwachungsmodul (113b) jeweils einen Ausgang umfassen, der gleichzeitig mit einem diskreten Eingang des ersten Steuermoduls (105a) und einem diskreten Eingang des zweiten Steuermoduls (105b) verbunden ist, wobei die Ausgänge und die diskreten Eingänge verwendet werden, um das erste Steuermodul (105a) und das zweite Steuermodul (105b) in den nominalen Betriebsmodus und den rekonfigurierten Betriebsmodus zu schalten.

5. Bremssystem nach Anspruch 4, bei dem jedes Überwachungsmodul eine Vielzahl von Eingängen umfasst, die Überwachungssignale empfangen, und eine Rekombinationsfunktion an der Vielzahl von Eingängen durchführt, wobei das Ergebnis der Rekombinationsfunktion an dem Ausgang des Überwachungsmoduls angewandt wird.

6. Bremssystem nach Anspruch 5, bei dem die Überwachungssignale ein Software-Überwachungssignal umfassen, das ermöglicht, das Fehlen einer Bremsung in Antwort auf einen Bremssollwert zu erfassen, und/oder ein Hardware-Überwachungssignal, das ermöglicht, eine fehlende Aktivität zu erfassen, und/oder ein Signal zum Überwachen eines Ausgangs eines Steuermoduls (105).

7. Bremssystem nach Anspruch 1, bei dem jedes Steuermodul einen nominalen Ausgang besitzt, der in dem nominalen Betriebsmodus und in dem rekonfigurierten Betriebsmodus genutzt wird, und einen rekonfigurierten Ausgang, der nur in dem rekonfigurierten Betriebsmodus verwendet wird, wobei der nominale Ausgang eines der Steuermodule und der rekonfigurierte Ausgang des anderen Steuermoduls mit elektromechanischen Aktoren über eine ODER-Einheit (112) verbunden sind, die eine logische ODER-Funktion an Eingängen der ODER-Einheit (112) durchführt und das Ergebnis der ODER-Funktion an einem Ausgang der ODER-Einheit (112) anwendet.

8. Bremssystem nach einem der vorhergehenden Ansprüche, bei dem jeder elektromechanische Aktor (101) über einen Wechselrichter (106) gesteuert wird, der in einem Bremsrechner (102) integriert ist, in dem das erste Steuermodul (105a) und das zweite Steuermodul (105b) positioniert sind.

9. Bremssystem nach einem der Ansprüche 1 bis 7, bei dem jeder elektromechanische Aktor (101) über einen Wechselrichter (106) gesteuert wird, der in dem elektromechanischen Aktor (101) integriert ist.

## Claims

1. An aircraft braking system comprising:
• a first group (Ga) of electromechanical actuators (101) and a second group (Gb) of electromechanical actuators (101) arranged to apply a braking force to wheels of the aircraft; **characterized by**
• a first control module (105a) adapted, in a nominal mode of operation, to control the first group of electromechanical actuators, and in a reconfigured mode of operation, to control the first group of electromechanical actuators and the second group of electromechanical actuators, and a second control module (105b) adapted, in a nominal mode of operation, to control the second group of electromechanical actuators, and in a reconfigured mode of operation, to control the first group of electromechanical actuators and the second group of electromechanical actuators; and
• a monitoring unit adapted to monitor the operation of the first control module and of the second control module, and to put the first control module into the reconfigured mode of operation when the monitoring unit detects a failure of the second control module, and to put the second control module into the reconfigured mode of operation when the monitoring unit detects a failure of the first control module.

2. A braking system according to claim 1, wherein, when one of the first and second control modules (105a, 105b) is in the reconfigured mode of operation, the other one of the first and second control modules (105a, 105b) is necessarily inhibited, and wherein, when one of the first and second control modules (105a, 105b) is in the nominal mode of operation, the other one of the first and second control modules (105a, 105b) is likewise necessarily in the nominal mode of operation.

3. A braking system according to claim 1, wherein the monitoring unit includes a first monitoring module (113a) arranged to monitor the operation of the first control module (105a) and a second monitoring module (113b) arranged to monitor the operation of the second control module (105b), the first monitoring module (113a) being adapted, on detecting a failure of the first control module, to cause the second control module to switch into the reconfigured mode, and the second monitoring module (113b) being adapted, on detecting a failure of the second control module, to cause the first control module to switch into the reconfigured mode.

4. A braking system according to claim 3, wherein each of the first and second monitoring modules (113a, 113b) has an output connected both to a discrete input of the first control module (105a) and to a discrete input of the second control module (105b), the discrete outputs and inputs being used to cause the first and second control modules (105a, 105b) to switch into the nominal mode of operation and into the reconfigured mode of operation.

5. A braking system according to claim 4, wherein each monitoring module possesses a plurality of inputs receiving monitoring signals and performs a recombination function on the plurality of inputs, the result of the recombination function being applied to the output of the monitoring module.

6. A braking system according to claim 5, wherein the monitoring signals comprise a software monitoring signal serving to detect an absence of braking in response to a braking setpoint and/or a hardware monitoring signal serving to detect a lack of activity and/or a signal monitoring the output from a control module (105).

7. A braking system according to claim 1, wherein each control module possesses a nominal output used in the nominal mode of operation and in the reconfigured mode of operation, and a reconfigured output used solely in the reconfigured mode of operation, the nominal output of one of the control modules and the reconfigured output of the other control module being connected to electromechanical actuators via an OR unit (112) that performs a logic OR function on inputs of the OR unit (112) and that applies the result of the OR function to an output of the OR unit (112).

8. A braking system according to any preceding claim, wherein each electromechanical actuator (101) is controlled via an inverter (106) incorporated in a braking computer (102) in which the first and second control modules (105a, 105b) are positioned.

9. A braking system according to any one of claims 1 to 7, wherein each electromechanical actuator (101) is controlled via an inverter (106) incorporated in the electromechanical actuator (101).
